# EUROPÄISCHE PATENTANMELDUNG

(11) **EP 4 253 875 A1**
(43) Veröffentlichungstag der Anmeldung: **04.10.2023**
(21) Anmeldenummer: 22164837.1
(22) Anmeldetag: 28.03.2022
(51) Int. Cl.: F25B 41/26, F16K 27/00, F01P 7/14

(54) **ROTATIONSVENTIL**

(71) Anmelder: TI Automotive Technology Center GmbH, 76437 Rastatt (DE)
(72) Erfinder: Boecker, Albert, 76275 Ettlingen (DE); Winter, Matthias, 76437 Rastatt (DE); Schaefer, Thorsten, 76889 Steinfeld (DE); Deibel, Florian, 76547 Sinzheim (DE); Olbrich, Matthias Bernhard, 76437 Rastatt (DE); Tuzin, Artem, 76297 Stutensee (DE)
(74) Vertreter: Reiser & Partner Patentanwälte mbB

(57) **Zusammenfassung**

Rotationsventil (1), umfassend ein Ventilgehäuse (2) mit einer Ventilkammer (3), wobei die Ventilkammer (3) eine Kammerwand (4) aufweist, in die mindestens zwei Fluidöffnungen (5) eingebracht sind, wobei die Ventilkammer (3) stirnseitig eine Aufnahmeöffnung (6) aufweist, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch beweglich in der Ventilkammer (3) gelagert ist, wobei der Ventilkern (7) kontinuierlich drehbar ist.

## Beschreibung

### Rotationsventi l

Die Erfindung betrifft ein Rotationsventil, umfassend ein Ventilgehäuse mit einer Ventilkammer, wobei die Ventilkammer eine Umfangswand aufweist, in die mindestens zwei Fluidöffnungen eingebracht sind, wobei die Ventilkammer stirnseitig eine Aufnahmeöffnung aufweist, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch beweglich in der Ventilkammer gelagert ist.

Ein derartiges Rotationsventil ist beispielsweise aus der DE 10 2018 009 680 A1 bekannt. Rotationsventile der genannten Art finden häufig in Kühlkreisläufen zur Steuerung des Kühlmittelstroms Einsatz. Durch die in das Ventilgehäuse eingebrachten Fluidöffnungen kann ein Kühlfluid ein- und ausströmen. Die in den Ventilkern eingebrachte Kanalstruktur steuert dabei den Kühlmittelstrom, wobei je nach Ausgestaltung und Anzahl der Fluidöffnungen unterschiedliche Kühlkreisläufe angesteuert, der Volumenstrom reguliert oder die Durchflussrichtung angepasst werden können.

Die Ausgestaltung als Rotationsventil ist dabei vorteilhaft, weil eine Anpassung des Kühlmittelstroms durch Drehen des Ventilkerns erfolgt, wobei der entsprechende Aktor zum Drehen des Ventilkerns einfach ausgebildet und einfach ansteuerbar ist. Dementsprechend sind Rotationsventile und die dazugehörigen Aktoren kostengünstig herstellbar. Darüber hinaus benötigen Rotationsventile nur wenig Bauraum.

Dabei ist es auch bekannt, die Elemente des Rotationsventils aus Kunststoff auszubilden. Dabei kann sich aber das Problem ergeben, dass bei einem dichtenden Kontakt zwischen Ventilkern und Ventilgehäuse aufgrund der erforderlichen Anpressung hohe Reibungskräfte und damit ein erhöhter Verschleiß auftreten. Ist der Ventilkern hingegen spielbehaftet in dem Ventilgehäuse angeordnet, sinken zwar die für die Rotation erforderlichen Kräfte und der Verschleiß, es kann sich aber über den Spalt zwischen Ventilgehäuse und Ventilkern eine unerwünschte Leckage ergeben.

Derartige Rotationsventile sind insbesondere vorteilhaft in Bezug auf den Einsatz in Temperierkreisläufen im Bereich der Elektromobilität. Zur Erzielung einer hohen Reichweite von Elektrofahrzeugen ist es beispielsweise erforderlich, elektrische Komponenten zu temperieren. Zu temperierende Komponenten von Elektrofahrzeugen sind dabei insbesondere Akkumulatoren, aber auch die Leistungselektronik oder Steckverbindungen von Schnellladeeinrichtungen. Ein Akkumulator hat eine bestmögliche Kapazität nur in einem sehr kleinen Temperaturspektrum. Daher ist es erforderlich, Akkumulatoren von Elektrofahrzeugen bei tiefen Umgebungstemperaturen zu erwärmen und bei hohen Außentemperaturen oder bei einer hohen Lastabnahme zu kühlen.

Hierzu ist es bekannt, einen Temperierkreislauf vorzusehen, durch welchen ein Temperiermedium strömt. Das Temperiermedium kann dabei je nach Anforderung entweder in einer Heizeinrichtung erwärmt oder in einer Kühleinrichtung abgekühlt werden. Die Steuerung des Temperiermediumstroms kann dabei durch Rotationsventile erfolgen.

Der Erfindung liegt die Aufgabe zugrunde, ein Rotationsventil bereitzustellen, welches kostengünstig ist und an den Bedarf anpassbare Volumenströme ermöglicht.

Diese Aufgabe wird mit den Merkmalen von Anspruch 1 gelöst. Auf vorteilhafte Ausgestaltungen nehmen die Unteransprüche Bezug.

Das erfindungsgemäße Rotationsventil umfasst ein Ventilgehäuse mit einer Ventilkammer, wobei die Ventilkammer eine Umfangswand aufweist, in die mindestens zwei Fluidöffnungen eingebracht sind, wobei die Ventilkammer stirnseitig eine Aufnahmeöffnung aufweist, wobei die Ventilkammer einen Ventilkern aufnimmt, wobei der Ventilkern mit einer Kanalstruktur versehen ist, welche mit den Fluidöffnungen zusammenwirkt, wobei der Ventilkern rotatorisch beweglich in der Ventilkammer gelagert ist, wobei der Ventilkern kontinuierlich drehbar ist.

Erfindungsgemäß kann die Kanalstruktur eine strömungsleitende Verbindung zwischen Fluidöffnungen herstellen, Fluidöffnungen verschließen und aufgrund der kontinuierlichen Drehbarkeit auch Zwischenpositionen einnehmen, in welchen Fluidöffnungen nur teilweise strömungsleitend verbunden sind. Dadurch können Volumenströme nahezu stufenlos variiert werden.

Durch Rotation des Ventilkerns kann die strömungsleitende Verbindung zwischen Kanalstruktur und Fluidöffnung, vorzugsweise innerhalb vorgegebener Intervalle, proportional veränderbar sein. Durch den kontinuierlich drehbaren Ventilkern bildet das Rotationsventil ein Proportionalventil, wobei die Fluidöffnungen durch Drehung des Ventilkerns vollständig geöffnet, vollständig geschlossen oder teilweise geöffnet sein können. In Abhängigkeit der Ausgestaltung der Kanalstruktur und der Position des Ventilkerns relativ zu dem Ventilgehäuse ist durch die Möglichkeit der kontinuierlichen Drehbarkeit des Ventilkerns möglich, dass Fluidöffnungen nur teilweise geöffnet sind, so dass der Volumenstrom reduziert ist. Des Weiteren ist es möglich, dass ein durch eine Fluidöffnung in den Ventilkern einströmender Volumenstrom in mehrere Teilvolumenströme aufgeteilt wird, wobei die Teilvolumenströme den Ventilkern über mehrere Fluidöffnungen verlassen.

In die Kammerwand können mehrere Fluidöffnungen eingebracht sein, wobei Fluidöffnungen durch Rotation des Ventilkerns wahlweise strömungsleitend miteinander in Verbindung bringbar sind. Dabei kann das Rotationsventil ein Wegeventil ausbilden und Volumenströme zwischen den Fluidöffnungen umlenken oder Volumenströme in Teilvolumenströme aufteilen.

Insbesondere im Zusammenhang mit einem Temperierkreislauf eines Fahrzeugs ist es beispielsweise denkbar, dass verschiedene Komponenten des Fahrzeugs an den Temperierkreislauf angebunden sind, wobei sich der Temperierbedarf der Komponenten je nach Betriebszustand sehr stark unterscheiden kann.

Elektrofahrzeuge sind beispielsweise mit Elektromotoren, Akkumulatoren und Leistungselektronik ausgerüstet, welche je nach Umgebungsbedingungen und Betriebszustand gekühlt oder auch erwärmt werden müssen. Durch das erfindungsgemäße Rotationsventil können die Komponenten bedarfsgerecht mit Temperiermedium versorgt werden. Durch die proportionale Verstellbarkeit des Ventilkerns können mehrere Komponenten gleichzeitig mit Teilvolumenströmen des Temperiermediums versorgt werden. Dabei ist auch denkbar, dass durch Verdrehen des Ventilkerns die Kanalstruktur so verdreht wird, dass sich die Flussrichtungen von Volumenströmen umkehren.

Vorzugsweise ist der Ventilkern mit einem Aktor wirkverbunden. Dabei ist es insbesondere denkbar, dass der Aktor als Elektromotor ausgebildet ist. Durch den Aktor erfolgt die Verdrehung des Ventilkerns, wobei der Aktor ausgebildet ist, den Ventilkern kontinuierlich zu verdrehen. Unter kontinuierlich im Sinne der Erfindung ist dabei aber auch eine Verstellbarkeit des Ventilkerns in diskreten Schritten zu verstehen. Dementsprechend werden Drehwinkelverstellungen in einem Intervall von 0,5° bis 20°, bevorzugt von 1° bis 15° und besonders bevorzugt von 1,5° bis 10° als kontinuierlich verstanden. Das Rotationsventil ist dabei so ausgebildet, dass eine Verstellung des Ventilkerns um einen Winkel von 20° eine Änderung des Volumenstroms, der in eine Fluidöffnung einströmt oder aus einer Fluidöffnung ausströmt, von 50 % bewirkt.

Bevorzugt erfolgt die Verstellung des Ventilkerns derart, dass je Verstellintervall eine Volumenstromänderung des in eine Fluidöffnung einströmenden bzw. aus einer Fluidöffnung ausströmenden Fluids von mindestens 1 % bis maximal 20 %, bevorzugt von mindestens 2 % bis maximal 15 %, besonders bevorzugt von mindestens 3 % bis 12 % erfolgt.Wesentlich ist, dass die Kanalstruktur relativ zu den Fluidöffnungen Zwischenpositionen einnehmen kann.

Der Aktor kann als Schrittmotor ausgebildet sein. Ein Schrittmotor ist so ausgebildet, dass eine Umdrehung des Schrittmotors in eine vorgegebene Anzahl von Winkelschritten eingeteilt ist. Dadurch kann mit dem Schrittmotor die Position des Ventilkerns erfasst werden und der Schrittmotor kann bestimmte Positionen des Ventilkerns ansteuern.

Die Ventilkammer kann konisch ausgebildet sein. Bei dieser Ausgestaltung ist der Ventilkern vorzugsweise kongruent zu der Ventilkammer ausgebildet und außenseitig, insbesondere entlang der der Kammerwand zugewandten Kanten, konisch ausgebildet. Dadurch kann der Ventilkern derart in dem Ventilgehäuse montiert sein, dass zwischen Ventilkern und Ventilgehäuse nur ein sehr geringer Spalt entsteht, was die Gefahr einer Leckage reduziert.

Die Ventilkammer ist vorzugsweise durch eine Kammerwand und einen Kammerboden begrenzt, wobei die Kammerwand den Ventilkern umgibt, wobei sich der Durchmesser der Kammerwand ausgehend von dem Kammerboden in Richtung der Aufnahmeöffnung erweitert. Dabei ist vorteilhaft, dass der Ventilkern besonders einfach in die Ventilkammer montierbar ist. Der Außenumfang des Ventilkerns gelangt bei dieser Ausgestaltung erst dann in Kontakt mit der Kammerwand, wenn der Ventilkern vollständig in die Ventilkammer eingeschoben ist. Dadurch vereinfacht sich die Montage des Rotationsventils, weil sich der Ventilkern und das Ventilgehäuse erst berühren, wenn der Ventilkern vollständig in das Ventilgehäuse eingeschoben ist. Dabei kann auch verhindert werden, dass Bestandteile des Ventilkerns, beispielsweise die Kanalstruktur, während der Montage beschädigt werden.

Die außenumfangsseitigen Begrenzungen des Ventilkerns können direkt an der Kammerwand des Ventilgehäuses zur Anlage gelangen. Es ist aber auch denkbar, dass die außenumfangsseitigen Begrenzungen des Ventilkerns, insbesondere im Bereich der Kanalstruktur, mit einer Dichtkontur versehen sind.

Vorzugsweise ist der Ventilkern translatorisch in der Ventilkammer gelagert. Bei dieser Ausgestaltung kann der Ventilkern während des Betriebs eine rein rotatorische, eine rein translatorische oder eine überlagerte translatorisch rotatorischen Bewegung ausführen. Bei einer überlagerten translatorisch rotatorischen Bewegung wird der Ventilkern translatorisch bewegt, wobei sich der Ventilkern bei einer konischen Ausgestaltung von Ventilkammer und Ventilkern von der Kammerwand beabstandet. Dabei entsteht ein Spalt, welcher ein Verdrehen des Ventilkerns relativ zu dem Ventilgehäuse bei zu vernachlässigender Reibung ermöglicht.

Ein Verstellen des Ventilkerns erfolgt dabei vorzugsweise derart, dass zunächst eine translatorische Bewegung ausgeführt wird, wobei sich der Ventilkern von der Kammerwand des Ventilgehäuses beabstandet, anschließend wird eine rotatorische Bewegung des Ventilkerns ausgeführt, so dass sich die Kanalstruktur in der gewünschten Art und Weise zu den Fluidöffnungen ausrichtet, gleichzeitig kann eine weitere translatorische Bewegung ausgeführt werden, und zum Schluss wird wieder eine translatorische Bewegung ausgeführt, wobei der Ventilkern wieder so in das Ventilgehäuse eingeführt wird, dass der Außenumfang des Ventilkerns weitestgehend spaltfrei an der Kammerwand des Ventilgehäuses anliegt. Dadurch ist es einerseits möglich, den Ventilkern verschleiß- und reibungsarm zu verstellen. Des Weiteren kann ein Fluidtransport über die Öffnungen des Ventilgehäuses und die Kanalstruktur des Ventilkerns unter Vermeidung einer Leckage erfolgen.

Das Ventilgehäuse kann von einem Sammler umgeben sein. Dabei kann der Sammler gleichzeitig die Außenwand des Ventilgehäuses bilden. Zwischen der Kammerwand, welche aus dem Ventilgehäuse ausgebildet ist, und dem Sammler kann sich dabei ein Zwischenraum ergeben. Dadurch ist das Rotationsventil einerseits besonders leicht, andererseits aber auch mechanisch stabil.

Das Ventilgehäuse und/oder der Ventilkörper können als Spritzgussteil ausgebildet sein. Dadurch sind sowohl das Ventilgehäuse als auch der Ventilkörper kostengünstig herstellbar. Der Sammler kann aus poylmerem Werkstoff bestehen und als Blasformteil ausgebildet sein. Dadurch kann der Sammler eine komplexe Außengeometrie aufweisen, gleichzeitig aber kostengünstig herstellbar sein.

Das Ventilgehäuse, der Ventilkörper und/oder der Sammler bestehen vorzugsweise aus Kunststoff. Vorzugsweise gelangt dabei ein spritzgießfähiger thermoplastischer Kunststoff zum Einsatz. Dadurch ergibt sich ein kostengünstig herstellbares Rotationsventil. Bevorzugte Werkstoffe für das Ventilgehäuse und den Ventilkern sind aus den Kunststoffen Polyoxymethylene (POM), Polyphenylensulfide (PPS) oder Polyamide (PA) ausgewählt. Die Kunststoffe können mit Zuschlägen, beispielsweise einer Faserverstärkung basierend auf Glasfasern versehen sein. Die Schaltwelle ist vorzugsweise aus faserverstärktem Kunststoffmaterial ausgebildet. Alternativ kann die Schaltwelle auch aus metallischem Werkstoff ausgebildet sein. Der Sammler ist vorzugsweise aus Polypropylen (PP) ausgebildet. Sofern der Ventilkern außenumfangsseitig im Bereich der Kanalstruktur mit einer Dichtkontur versehen ist, ist insbesondere denkbar, dass die Dichtkontur aus thermoplastischem Elastomer ausgebildet ist und der Ventilkern im Zweikomponentenspritzguss hergestellt ist.

Die Fluidöffnungen sind vorzugsweise als Anschlussstutzen ausgebildet. Die Anschlussstutzen sind dabei geeignet, Fluidleitungen in Form von Rohren und/oder Schläuchen aufzunehmen. Diese können dann einfach und kostengünstig an das Rotationsventil angebunden werden.

Der Ventilkern kann entlang der dem Ventilgehäuse zugeordneten Kanten mit einer Dichtkontur versehen sein. Dadurch können Leckagen zwischen Ventilkern und Ventilgehäuse vermieden werden. Die Dichtkontur lässt sich besonders einfach und kostengünstig herstellen, wenn der Ventilkern als Zweikomponenten-Spritzgussteil aus Kunststoff ausgebildet ist. Bei dieser Ausgestaltung kann die Dichtkontur in einem Zug mit der Herstellung des Ventilkerns an den Ventilkern fest angeformt werden.

Ein erfindungsgemäßer Temperierkreislauf umfasst zumindest ein Rotationsventil der zuvor beschriebenen Art. Der Temperierkreislauf kann dabei eine oder auch mehrere Komponenten eines Elektrofahrzeugs, beispielsweise einen Akkumulator, eine Leistungselektronik oder eine Leitungs-, beziehungsweise Steckerkomponente temperieren. Derartige Komponenten weisen eine optimale Leistungsfähigkeit nur in einem begrenzten Temperaturintervall auf und müssen dementsprechend je nach Umgebungsbedingungen und Leistungsanforderungen erwärmt oder gekühlt werden.

Dementsprechend kann die Temperiereinrichtung neben einer Fördereinrichtung eine Heizeinrichtung und eine Kühleinrichtung umfassen. Die Ansteuerung der zu temperierenden Komponenten sowie einer Heizeinrichtung und einer Kühleinrichtung erfolgt über das Rotationsventil. Durch die proportionale Verstellbarkeit ist es nicht nur möglich, die Volumenströme durchzuleiten oder umzulenken, sondern auch zu variieren. Dadurch können die Volumenströme für jede Komponente bedarfsweise angepasst werden.

Einige Ausgestaltungen des erfindungsgemäßen Rotationsventils werden nachfolgend anhand der Figuren näher erläutert. Diese zeigen, jeweils schematisch:
Fig. 1 ein Rotationsventil im Schnitt;
Fig. 2 das Rotationsventil in dreidimensionaler, geschnittener Darstellung;
Fig. 3 im Detail den Ventilkern des Rotationsventils;
Fig. 4 im Detail das Ventilgehäuse des Rotationsventils;
Fig. 5 im Detail der Sammler des Rotationsventils;
Fig. 6 ein Rotationsventil in Seitenansicht und Draufsicht in einer ersten Position;
Fig. 7 ein Rotationsventil in Seitenansicht und Draufsicht in einer zweiten Position;
Fig. 8 ein Rotationsventil in Seitenansicht und Draufsicht in einer dritten Position.

Die Figuren zeigen ein Rotationsventil 1 als Bestandteil eines Temperierkreislaufs einer zu klimatisierenden Einrichtung. Bei der vorliegenden Ausgestaltung gelangt das Rotationsventil 1 in elektromobilen Anwendungen als Bestandteil des Temperierkreislaufs eines Elektrofahrzeugs zum Einsatz. Das Rotationsventil 1 ist dabei in einen Temperierkreislauf eines elektromotorischen Antriebs eines Elektrofahrzeugs eingebunden und lenkt Volumenströme des in dem Temperierkreislauf geführten Mediums zu den Akkumulatoren und Elektromotoren sowie zur Leistungselektronik. Durch das Rotationsventil 1 können Temperiermittelströme des Temperierkreislaufs modifiziert werden.

In diesem Zusammenhang ist es denkbar, den Volumenstrom des Temperiermittels zu modifizieren, also zu vergrößern oder zu verkleinern. Des Weiteren kann durch die Drehung des Ventilkerns 7 die Strömungsrichtung des Temperiermittels geändert werden. Insofern bildet das erfindungsgemäße Rotationsventil 1 ein Wegeventil, durch das verschiedene Komponenten der zu temperierenden Einrichtungen einzeln und gezielt mit Temperiermedium versorgt und bedarfsweise auch vom Temperiermittelstrom getrennt werden können.

Je nach Umgebungstemperatur und Leistungsanforderungen kann beispielsweise ein Temperiermittelstrom zunächst ausschließlich zu den Akkumulatoren geleitet werden und dort je nach Umgebungstemperaturen die Akkumulatoren kühlen oder erwärmen. Bei hohen Leistungsanforderungen kann ein Kühlmittelstrom zu der Leistungselektronik und auch zu den Elektromotoren geleitet werden, um diese Komponenten zu kühlen. Die Modifikation des Kühlmittelstroms erfolgt dabei mittels des Rotationsventils 1. Dabei kann das Rotationsventil 1 mehrere Magnetventile ersetzen, so dass der Temperierkreislauf kostengünstig herstellbar ist.

Das Rotationsventil 1 umfasst ein Ventilgehäuse 2 mit einer Ventilkammer 3, wobei die Ventilkammer 3 eine Kammerwand 4 aufweist. In die Kammerwand 4 sind sechs Fluidöffnungen 5 eingebracht. Die Ventilkammer 3 ist rotationssymmetrisch ausgebildet und weist eine im Wesentlichen konische Kammerwand 4 auf. In die Ventilkammer 3 ist stirnseitig eine Aufnahmeöffnung 6 eingebracht, über die ein Ventilkern 7 in die Ventilkammer 3 eingebracht ist. Der Ventilkern 7 ist mit einer Kanalstruktur 8 versehen, welche mit den Fluidöffnungen 5 zusammenwirkt. Der Ventilkern 7 ist rotatorisch beweglich in der Ventilkammer 3 gelagert. Je nach Stellung der Ventilkammer 3 und der zu den Fluidöffnungen 5 ausgerichteten Kanalstruktur 8 ergeben sich verschiedene Transportrichtungen für das über die Fluidöffnungen 5 ein- und ausströmende Fluid.

Das Ventilgehäuse 2 ist außenseitig von einem Sammler 14 umgeben. Das Ventilgehäuse 2, der Ventilkern 7 und der Sammler 14 bestehen aus einem thermoplastischen Kunststoff. Das Ventilgehäuse 2 und der Ventilkern 7 sind als Spritzgussteil ausgebildet. Der Sammler 14 ist als Blasformteil ausgebildet.

Die Fluidöffnungen 5 sind als Anschlussstutzen ausgebildet. Dabei erstreckt sich ein rohrförmiger Abschnitt der Fluidöffnungen 5 in den Sammler 14 hinein. Der Sammler 14 weist entsprechende, ebenfalls als Anschlussstutzen ausgebildete, Abschnitte auf. Diese sind ausgebildet, Rohrleitungen oder Schläuche aufzunehmen.

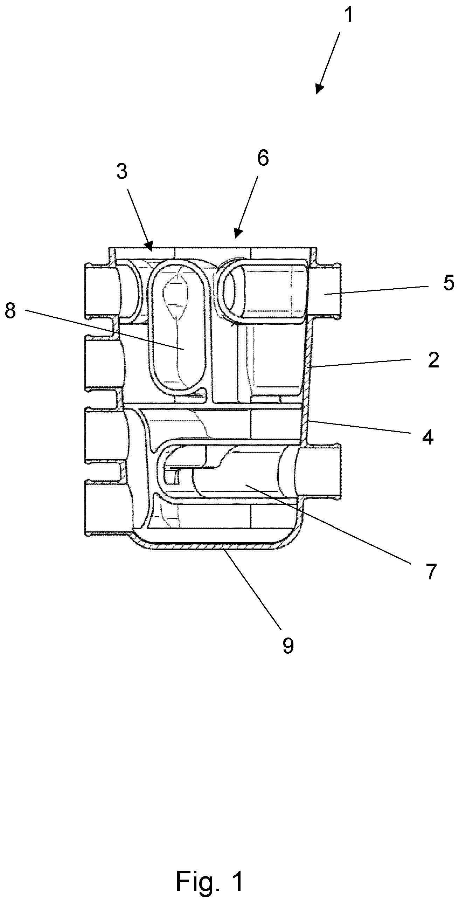

Figur 1 zeigt eine Schnittdarstellung des Rotationsventils 1 gemäß einer ersten Ausgestaltung. Die Ventilkammer 3 ist konisch ausgebildet und der Ventilkern 7 ist außenumfangsseitig kongruent zu der Ventilkammer 3 und damit ebenfalls konisch ausgebildet. Die Ventilkammer 3 ist durch die Kammerwand 4 und einen Kammerboden 9 begrenzt. Dabei umgibt die Kammerwand 4 den Ventilkern 7, wobei sich der Durchmesser der Kammerwand 4 ausgehend von dem Kammerboden 9 in Richtung der Aufnahmeöffnung 6 erweitert. Zum Verstellen des Ventilkerns 7 und um die Kanalstruktur 8 relativ zu den Fluidöffnungen 5 zu verdrehen, kann der Ventilkern 7 sowohl translatorisch als auch rotatorisch zu dem Ventilgehäuse 2 verfahren werden.

Dabei ist der Ventilkern 7 mit einem Aktor wirkverbunden. Der Aktor bewirkt die Verdrehung des Ventilkerns 7 und kann bei der vorliegenden Ausgestaltung eine überlagerte rotatorische und translatorische Bewegung ausführen. Durch die translatorische Bewegung entsteht zwischen Ventilgehäuse 2 und Ventilkern 7 ein Spalt, was ein reibungsarmes Verdrehen des Ventilkerns 7 relativ zu dem Ventilgehäuse 2 ermöglicht. Der Aktor ist bei der vorliegenden Ausgestaltung ein Elektromotor in Form eines Schrittmotors. Durch den Aktor ist der Ventilkern 7 in beiden Richtungen kontinuierlich drehbar, so dass durch Rotation des Ventilkerns 7 die strömungsleitende Verbindung zwischen Kanalstruktur 8 und Fluidöffnungen 5 proportional veränderbar ist. Der Aktor ist so ausgebildet, dass der Ventilkern 7 in Intervallen, beziehungsweise Drehwinkelschritten von 2° verstellbar ist. Durch eine Verstellung um einen Drehwinkelschritt in Höhe von 2° erfolgt dabei eine Änderung des die Fluidöffnungen durchströmenden Fluids um 5 %.

Dadurch kann die Kanalstruktur 8 des Ventilkerns 7 so verdreht werden, dass Fluidkanäle vollständig oder auch nur teilweise mit der Kanalstruktur 8 in Strömungsverbindung stehen. Dementsprechend können Fluidöffnungen 5 durch Rotation des Ventilkerns 7 wahlweise strömungsleitend miteinander in Verbindung gebracht werden. Dadurch kann der Temperiermittelstrom beispielsweise in Teilströme aufgeteilt werden, welche über die Fluidöffnungen 5 in Richtung verschiedener Komponenten eines Elektrofahrzeugs geleitet werden.

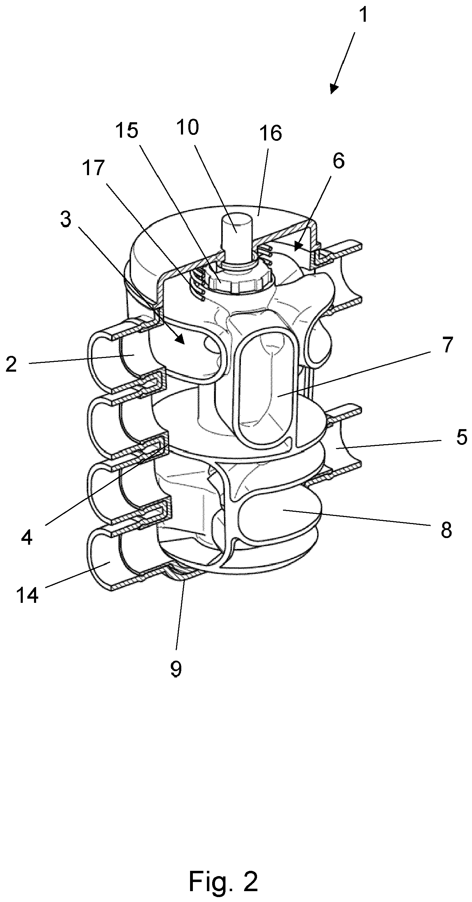

Figur 2 zeigt eine Schnittdarstellung des Rotationsventils 1. Gemäß Figur 2 ist die Ventilkammer 3 konisch ausgebildet. Der Ventilkern 7 ist außenumfangsseitig kongruent zu der Ventilkammer 3 und damit ebenfalls konisch ausgebildet. Die Ventilkammer 3 ist durch die Kammerwand 4 und einen Kammerboden 9 begrenzt. Dabei umgibt die Kammerwand 4 den Ventilkern 7, wobei sich der Durchmesser der Kammerwand 4 ausgehend von dem Kammerboden 9 in Richtung der Aufnahmeöffnung 6 erweitert.

Der Ventilkern 7 ist sowohl rotatorisch als auch translatorisch in der Ventilkammer 3 gelagert. Zum Verstellen des Ventilkerns 7 und um die Kanalstruktur 8 relativ zu den Fluidöffnungen 5 zu verdrehen, kann der Ventilkern sowohl translatorisch als auch rotatorisch zu dem Ventilgehäuse 2 verfahren werden.

Die Aufnahmeöffnung 6 des Ventilgehäuses 2 ist durch einen Deckel 16 verschlossen, wobei eine Schaltwelle 10 durch den Deckel 16 hindurchragt. Die Schaltwelle 10 ist drehfest mit dem Ventilkern 7 verbunden. Hierzu ist aus der Schaltwelle ein Verdrehelement 15 ausgebildet, welches in eine in den Ventilkern 7 eingebrachte Ausnehmung 21 eingreift. Das Verdrehelement 15 weist außenumfangsseitig eine Verzahnung auf, welche in eine in den Innenumfang der Ausnehmung 21 eingebrachte, kongruent ausgebildete Verzahnung eingreift und so eine Übertragung des Drehmomentes von der Schaltwelle 10 auf den Ventilkern 7 ermöglicht. Zwischen Deckel 16 und Ventilkern 7 ist eine Feder 17 angeordnet, welche den Ventilkern 7 auf den Kammerboden 9 andrückt.

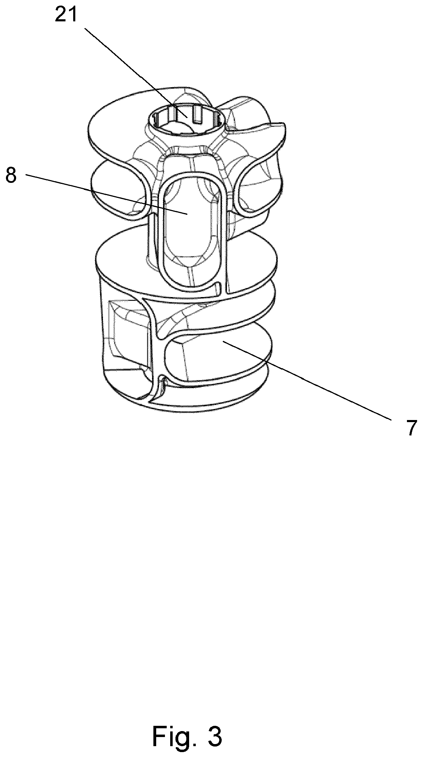

Figur 3 zeigt im Detail den Ventilkern 7 des Rotationsventils 1 gemäß Figur 2. Zu erkennen ist die in den Ventilkern 7 eingebrachte Ausnehmung 21 mit der Verzahnung. Der Ventilkern 7 ist im Bereich der dem Ventilgehäuse 2 zugewandten Kanten mit einer Dichtkontur aus thermoplastischem Elastomer versehen. Der Ventilkern 7 ist als Zweikomponenten-Spritzgussteil aus Kunststoff ausgebildet.

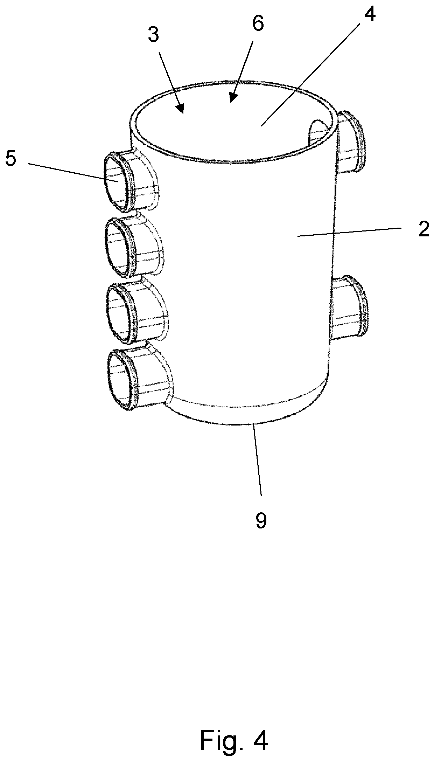

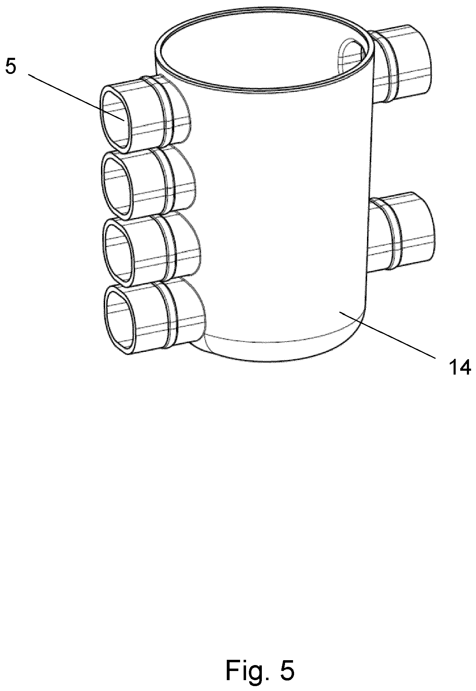

Figur 4 zeigt im Detail das Ventilgehäuse 2 des Rotationsventils 1, und Figur 5 zeigt im Detail den Sammler 14 des Rotationsventils 1.

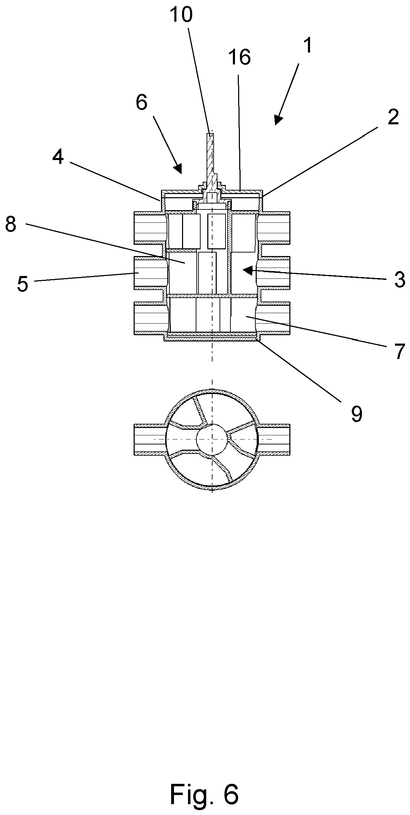

Figur 6 zeigt eine Ausgestaltung eines Rotationsventils 1, welches hinsichtlich seiner Komponenten vergleichbar zu dem zuvor gezeigten Rotationsventil 1 ausgebildet ist. Bei dem hier gezeigten Rotationsventil 1 ist der Ventilkern 7 kontinuierlich drehbar, so dass der Ventilkern 7 relativ zu dem Ventilgehäuse 2 eine beliebige Winkelstellung einnehmen kann. Die Drehbewegung des Ventilkerns 7 erfolgt mittels eines an der Schaltwelle 10 angeordneten Aktors in Form eines Schrittmotors. Die obere Darstellung zeigt eine Seitenansicht im Schnitt und die untere Ansicht eine Draufsicht im Schnitt, wobei die Schnittebene durch die oberen Fluidöffnungen 5 verläuft.

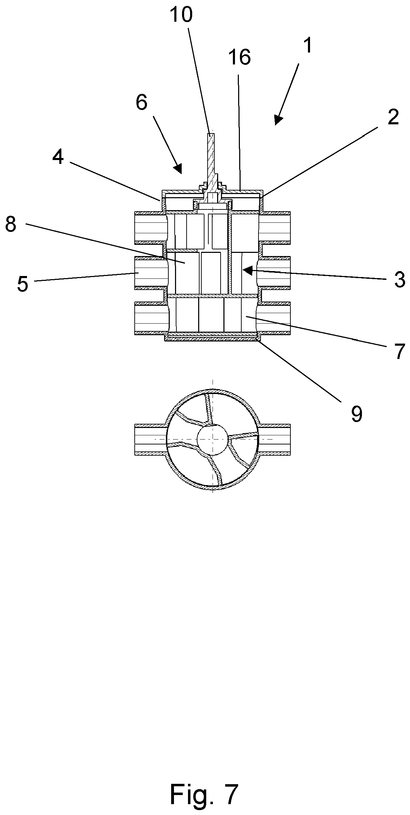

Bei der vorliegenden Ausgestaltung ist der Ventilkern 7 mit einer Kanalstruktur 8 versehen, wobei ein Kanalabschnitt durch die zentrale Achse des Ventilkerns 7 geführt ist. Dadurch ist es beispielsweise möglich, einen Volumenstrom zwischen übereinander angeordneten Fluidöffnungen 5 zu leiten. Bei der in Figur 7 gezeigten Position ist der Ventilkern 7 um null Grad verdreht, was insbesondere in der unteren Darstellung zu erkennen ist. In der unteren Darstellung ist ferner zu erkennen, dass die Kanalstruktur 8 des Ventilkerns 7 zu der Fluidöffnung 5 auf der linken Seite vollständig geöffnet ist, wobei über diese Fluidöffnung 5 einströmendes Temperiermedium in Richtung des Kanalabschnitts im Bereich der zentralen Achse gelangt. Ebenso ist die Kanalstruktur 8 zu der Fluidöffnung 5 auf der rechten Seite vollständig geöffnet. Das hier gezeigte Rotationsventil 1 bildet ein 5/6-Wegeventil.

Figur 7 zeigt das Rotationsventil 1 gemäß Figur 6, wobei der Ventilkern 7 um 15 Grad verdreht ist. Dabei ist zu erkennen, dass die Fluidöffnungen 5 nur noch teilweise mit den Kanälen in der Kanalstruktur 8 fluchten, so dass die Volumenströme im Vergleich zu der in Figur 6 gezeigten Position reduziert sind. Darüber hinaus ist zu erkennen, dass sich die über den rechten Fluidkanal 5 und den linken Fluidkanal 5 einströmenden Temperiermedien in der Kanalstruktur 8 mischen und gemeinsam in Richtung des Kanalabschnitts in der zentralen Achse strömen.

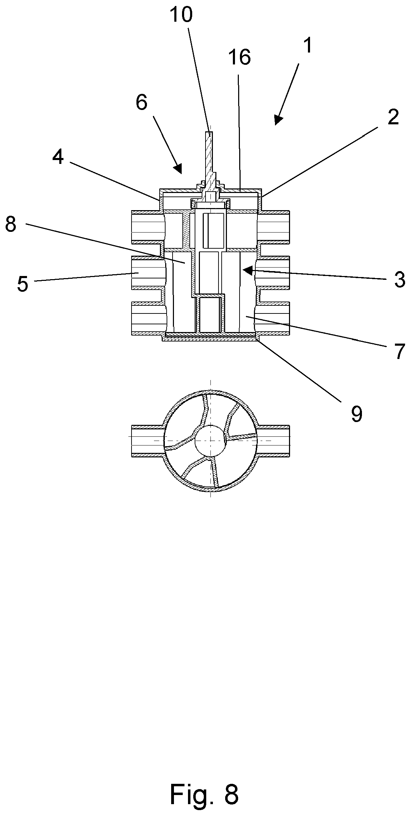

Figur 8 zeigt das Rotationsventil 1 gemäß Figur 6, wobei der Ventilkern 7 um 105 Grad verdreht ist. Dabei ist zu erkennen, dass die Fluidöffnung 5 auf der linken Seite nur noch geringförmig mit der Kanalstruktur 8 fluchtet, so dass über die linke Fluidöffnung 5 nur noch ein kleiner Volumenstrom in den Ventilkern 7 einströmen kann. Demgegenüber fluchtet die Fluidöffnung 5 auf der rechten Seite fast vollständig mit der Kanalstruktur 8. Auch in dieser Position mischen sich die über den rechten Fluidkanal 5 und den linken Fluidkanal 5 einströmenden Temperiermedien in der Kanalstruktur 8 und strömen gemeinsam in Richtung des Kanalabschnitts in der zentralen Achse.

## Patentansprüche

1. Rotationsventil (1), umfassend ein Ventilgehäuse (2) mit einer Ventilkammer (3), wobei die Ventilkammer (3) eine Kammerwand (4) aufweist, in die mindestens zwei Fluidöffnungen (5) eingebracht sind, wobei die Ventilkammer (3) stirnseitig eine Aufnahmeöffnung (6) aufweist, wobei die Ventilkammer (3) einen Ventilkern (7) aufnimmt, wobei der Ventilkern (7) mit einer Kanalstruktur (8) versehen ist, welche mit den Fluidöffnungen (5) zusammenwirkt, wobei der Ventilkern (7) rotatorisch beweglich in der Ventilkammer (3) gelagert ist, **dadurch gekennzeichnet, dass** der Ventilkern (7) kontinuierlich drehbar ist.

2. Rotationsventil nach Anspruch 1, **dadurch gekennzeichnet, dass** durch Rotation des Ventilkerns (7) die strömungsleitende Verbindung zwischen Kanalstruktur (8) und Fluidöffnungen (5) proportional veränderbar ist.

3. Rotationsventil nach Anspruch 1 oder 2, **dadurch gekennzeichnet, dass** in die Kammerwand (4) mehrere Fluidöffnungen (5) eingebracht sind, wobei Fluidöffnungen (5) durch Rotation des Ventilkerns (7) wahlweise strömungsleitend miteinander in Verbindung bringbar sind.

4. Rotationsventil nach einem der Ansprüche 1 bis 3, **dadurch gekennzeichnet, dass** der Ventilkern (7) mit einem Aktor wirkverbunden ist.

5. Rotationsventil nach Anspruch 4, **dadurch gekennzeichnet, dass** der Aktor als Schrittmotor ausgebildet ist.

6. Rotationsventil nach einem der Ansprüche 1 bis 5, **dadurch gekennzeichnet, dass** die Ventilkammer (3) konisch ausgebildet ist.

7. Rotationsventil nach Anspruch 6, **dadurch gekennzeichnet, dass** der Ventilkern (7) außenumfangsseitig konisch ausgebildet ist.

8. Rotationsventil nach Anspruch 6 oder 7, **dadurch gekennzeichnet, dass** die Ventilkammer (3) durch die Kammerwand (4) und einen Kammerboden (9) begrenzt ist, wobei die Kammerwand (4) den Ventilkern (7) umgibt, wobei sich der Durchmesser der Kammerwand (4) ausgehend von dem Kammerboden (9) in Richtung der Aufnahmeöffnung (6) erweitert.

9. Rotationsventil nach Anspruch 8, **dadurch gekennzeichnet, dass** der Ventilkern (7) rotatorisch und/oder translatorisch bewegbar ist.

10. Rotationsventil nach einem der Ansprüche 1 bis 9, **dadurch gekennzeichnet, dass** das Ventilgehäuse (2) außenseitig von einem Sammler (14) umgeben ist.

11. Rotationsventil nach einem der Ansprüche 1 bis 10, **dadurch gekennzeichnet, dass** das Ventilgehäuse (2), der Ventilkern (7) und/oder der Sammler (14) aus polymerem Werkstoff ausgebildet sind.

12. Rotationsventil nach einem der Ansprüche 1 bis 11, **dadurch gekennzeichnet, dass** die Fluidöffnungen (5) als Anschlussstutzen ausgebildet sind.

13. Rotationsventil nach einem der Ansprüche 1 bis 12, **dadurch gekennzeichnet, dass** der Ventilkern (7) entlang der dem Ventilgehäuse (2) zugeordneten Kanten mit einer Dichtkontur versehen ist.

14. Rotationsventil nach Anspruch 13, **dadurch gekennzeichnet, dass** der Ventilkern (7) als Zweikomponenten-Spritzgussteil aus polymerem Werkstoff ausgebildet ist.

15. Temperierkreislauf, umfassend zumindest ein Rotationsventil (1) nach einem der vorherigen Ansprüche.
